# EUROPEAN PATENT APPLICATION

(11) **EP 4 711 740 A1**
(43) Date of publication of application: **18.03.2026**
(21) Application number: 25198532.1
(22) Date of filing: 27.08.2025
(51) Int. Cl.: G01N 3/08

(54) **MATERIAL TESTING MACHINES HAVING ADJUSTABLE TEST FORCE LIMITS**

(30) Priority: 17.09.2024 US 202463695624 P; 18.08.2025 US 202519302835
(71) Applicant: Illinois Tool Works Inc., Glenview IL 60025 (US)
(72) Inventor: MEINCKE II, John W., Glenview, 60025 (US)
(74) Representative: HGF

(57) **Abstract**

Disclosed example material testing systems include: a test frame; a base configured to grip a first position on a test specimen; a crosshead configured to be coupled to a second position on the test specimen, and to be actuated to transfer testing force to the test specimen during a material test; an actuator configured to actuate the crosshead along the test frame and to apply the testing force to the crosshead; and control circuitry configured to: control the actuator to apply the testing force to a specimen via the crosshead, such that the testing force does not exceed an upper limit; and while a distance between the crosshead and the base is at least a threshold distance, reduce the upper limit on the testing force from a value of the upper limit while the distance between the crosshead and the base is less than the threshold distance.

## Description

### RELATED APPLICATIONS

The present application claims the benefit of U.S. Provisional Patent Application Serial No. 63/695,624, filed September 17, 2024, entitled "MATERIAL TESTING MACHINES HAVING ADJUSTABLE TEST FORCE LIMITS." The entirety of U.S. Provisional Patent Application Serial No. 63/695,624 is expressly incorporated herein by reference.

### TECHNICAL FIELD

The present disclosure generally relates to material testing machines and, more particularly, to material testing machines having adjustable test force limits.

### BACKGROUND

Material testing machines are used to test the tensile strength and compressive strength of various test samples. The testing machines are able to perform a variety of different tests on a variety of different test samples. Some of the tests require stretching or compressing a test sample using a crosshead of the material testing machine to measure strength, strain, and/or other properties.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to material testing machines with movable lower crossheads, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1A and 1B illustrate example material testing machines configured to apply a testing force to a specimen coupled between a crosshead and a base, in accordance with aspects of this disclosure.
FIG. 1C illustrates another example material testing machine configured to apply a testing force to a specimen coupled between upper and lower crossheads, in accordance with aspects of this disclosure.
FIGS. 2A-2C illustrate example relationships between upper testing force limits and crosshead position and/or distance, which may be used by the material testing machines of FIGS. 1A-1C.
FIG. 3 is a block diagram illustrating elements of the example material testing machines of FIGS. 1A-1C.
FIG. 4 is a flowchart illustrating an example method that may be performed to implement the example material testing machines of FIGS. 1A-1C to perform material testing.

The figures are not necessarily to scale. Where appropriate, the same or similar reference numerals are used in the figures to refer to similar or identical elements. For example, reference numerals utilizing lettering (e.g., upper crosshead 128a, lower crosshead 128b) refer to instances of the same reference numeral that does not have the lettering (e.g., crossheads 128).

### DETAILED DESCRIPTION

Universal test machines perform physical testing, such as tensile strength testing and compression strength testing, on material specimens. Conventional universal test machines are limited in the load string height due to physical limitations of some of the machine components. For example, ball screws of machines that exceed certain load string heights are subject to buckling due to high compressive forces. To prevent extended height testing systems from being damaged, conventional universal testing machines operate along the entire range using a reduced testing force.

Disclosed material testing systems enable the use of extended height test frames with higher testing force limits within normal specimen lengths and reduce the upper testing force limit for longer specimen lengths. In some examples, while the moving crosshead of the material testing system is within the normal operating range of the machine (e.g., less than a threshold distance between the crosshead and a base or between opposing crossheads, and/or while the crosshead is within a predetermined range of operating positions), the material testing system is permitted to apply testing forces to the specimens up to the rated capacity of the frame. Conversely, while the moving crosshead is within the extended range (e.g., more than a threshold distance between the crosshead and the base or between opposing crossheads, and/or while the crosshead is outside a predetermined range of operating positions), the material testing system is controlled to reduce the upper limit on testing forces that are applied to the specimen. The upper limit on the testing forces may be reduced a predetermined amount, and/or based on a distance between the crosshead position and the threshold position.

Disclosed example material testing systems include: a test frame; a base configured to grip a first position on a test specimen; a crosshead configured to be coupled to a second position on the test specimen, and to be actuated to transfer testing force to the test specimen during a material test; an actuator configured to actuate the crosshead along the test frame and to apply the testing force to the crosshead; and control circuitry configured to: control the actuator to apply the testing force to a specimen via the crosshead, such that the testing force does not exceed an upper limit; and while a distance between the crosshead and the base is at least a threshold distance, reduce the upper limit on the testing force from a value of the upper limit while the distance between the crosshead and the base is less than the threshold distance.

Some example material testing systems further include a position sensor configured to determine a position of the crosshead along a length of the test frame, in which the control circuitry is configured to determine the distance between the crosshead and the base based on the determined position of the crosshead. In some example material testing systems, the position sensor comprises a travel sensor.

In some example material testing systems, the control circuitry is configured to reduce the upper limit on the testing force by an amount that is based on a difference between 1) the distance between the crosshead and the base and 2) the threshold distance. In some example material testing systems, the control circuitry is configured to determine the upper limit based on the difference according to a curve. In some example material testing systems, the control circuitry is configured to determine the upper limit based on the difference using a lookup table. In some example material testing systems, the control circuitry is configured to determine the upper limit based on comparing the difference to each of a plurality of ranges of distances, each of the plurality of ranges corresponding to a value of the upper limit that is less than the value of the upper limit while the distance between the crosshead and the base is less than the threshold distance.

In some example material testing systems, the control circuitry is configured to control the actuator to stop the actuator in response to the testing force reaching the upper limit. In some example material testing systems, the control circuitry is configured to reduce the upper limit while the distance between the crosshead and the base is at least the threshold distance and a testing mode is a tension test. In some example material testing systems, the value of the upper limit while the distance between the crosshead and the base is less than the threshold distance is based on a rated capacity of the material testing system.

Disclosed example methods to control a material testing system involve: controlling, via control circuitry, an actuator of a material testing system to actuate a crosshead along a test frame of the material testing system, to apply a testing force to the crosshead to perform a tension test on a specimen, such that the testing force does not exceed an upper limit; and while a distance between the crosshead and a base of the material testing system is at least a threshold distance, reducing the upper limit on the testing force from a value of the upper limit while the distance between the crosshead and the base is less than the threshold distance.

Some additional disclosed example material testing systems include: a test frame; a base configured to grip a first position on a test specimen; a crosshead configured to be coupled to a second position on the test specimen, and to be actuated to transfer testing force to the test specimen during a material test; an actuator configured to actuate the crosshead along the test frame and to apply the testing force to the crosshead; and control circuitry configured to: control the actuator to apply the testing force to the crosshead to perform a tension test on a specimen, such that the testing force does not exceed an upper limit; and while a position of the crosshead is within a predetermined range along a length of the test frame, reduce the upper limit on the testing force from a value of the upper limit while the position of the crosshead is outside of the predetermined range.

Some example material testing systems further include a position sensor configured to determine the position of the crosshead along a length of the test frame. In some example material testing systems, the position sensor comprises a travel sensor.

In some example material testing systems, the control circuitry is configured to reduce the upper limit on the testing force by an amount that is based on a difference between 1) the position of the crosshead along the test frame and 2) a threshold position. In some example material testing systems, the control circuitry is configured to determine the upper limit based on the difference according to a curve. In some example material testing systems, the control circuitry is configured to determine the upper limit based on the difference using a lookup table. In some example material testing systems, the control circuitry is configured to determine the upper limit based on comparing the difference to each of a plurality of ranges of positions, each of the plurality of ranges corresponding to a value of the upper limit that is less than the value of the upper limit while the position of the crosshead is within the predetermined range.

In some example material testing systems, the control circuitry is configured to control the actuator to stop the actuator in response to the testing force reaching the upper limit. In some example material testing systems, the control circuitry is configured to reduce the upper limit while the position of the crosshead is outside of the predetermined range and a testing mode is a tension test.

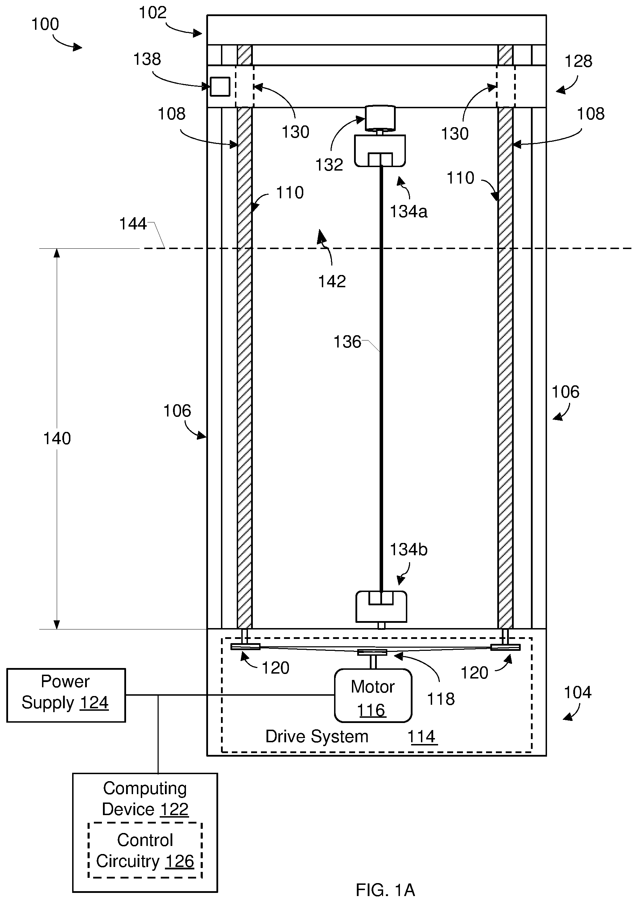

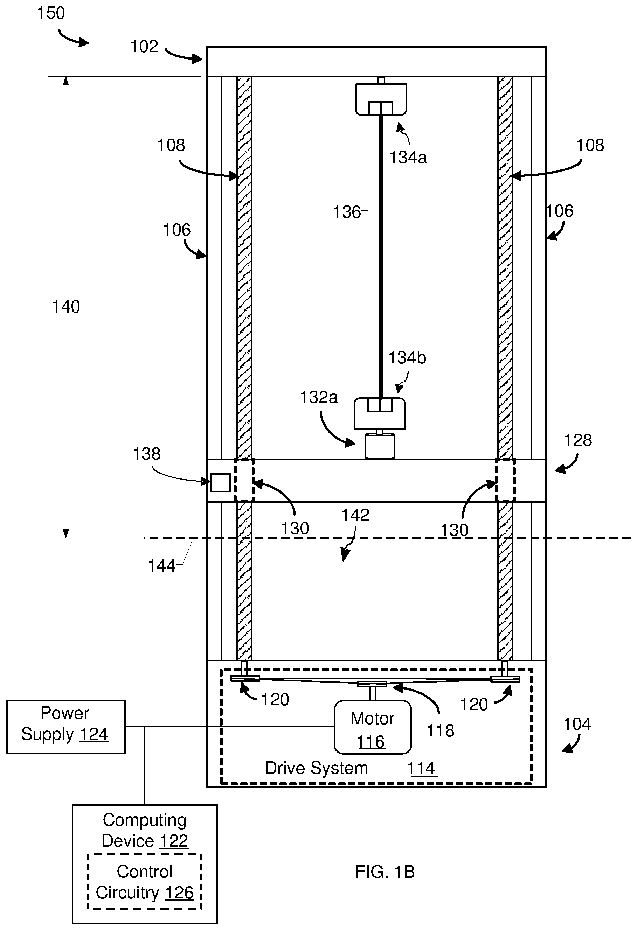

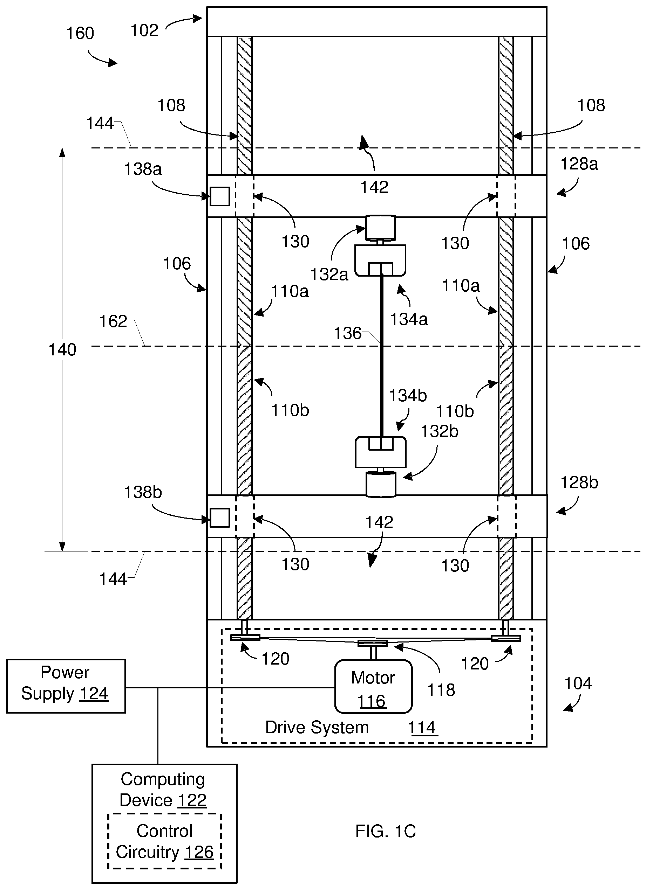

FIG. 1A illustrates an example material testing system 100 configured to apply a testing force to a specimen. As shown, the material testing system 100 includes a frame comprising a top plate 102 and a bottom base 104 connected by two guide rails 106 and two drive shafts 108. While two guide rails 106 and two drive shafts 108 are shown, in some examples, more or fewer guide rails 106 and/or drive shafts 108 may be used. In some examples, the drive shafts 108 are connected to the top plate 102 and bottom base 104 via bearings that allow the drive shafts 108 to rotate. While not shown in the example of FIG. 1 for the sake of clarity and understanding, in some examples, the guide rails 106 and/or drive shafts 108 may be enclosed in a housing.

In the example of FIG. 1A, the drive shafts 108 have screw threads 110 which, when the drive shafts 108 are rotated, translate the rotational force on the drive shafts 108 to vertical forces to move a crosshead 128 coupled to the drive shafts 108. The material testing system 100 further includes a drive system 114, which may be located in the base 104. As illustrated in FIG. 1A, the drive system 114 is connected to both drive shafts 108. In some examples, the drive system 114 is configured to actuate (e.g., rotate) both drive shafts 108 in either or both directions.

In the example of FIG. 1A, the drive system 114 includes a drive motor 116 that is connected to a driving pulley 118 via a rotor of the drive motor 116. The driving pulley 118 is connected to two driven pulleys 120 via one or more drive belts. Each driven pulley 120 is connected to a drive shaft 108 (e.g., either directly or through an intermediary mechanism, such as a rotor, ball bearing, gearing, and/or other component, for example). When the motor 116 actuates (e.g., rotates) the driving pulley 118, the driving pulley 118 actuates (e.g., rotates) the driven pulleys 120 via belt(s), which in turn actuates (e.g., rotates) the drive shafts 108. The screw threads 110 of the drive shafts 108 and the transmission configuration of the drive system 114 is configured to drive the crosshead 128 in a same direction simultaneously and evenly.

While, in the example of FIG. 1A, a simple drive system 114 is shown for ease of understanding, in some examples, the drive system 114 may be more complex. For example, the drive system 114 may include several drive motors 116, driving pulleys 118, gears, rotors, and/or belts, and/or more than two driven pulleys 120. Additionally the drive system 114 may include intermediary pulleys and/or belts, as well as other components. In some examples, the drive system 114 may be located somewhere other than the base 104 (e.g., in the top plate 102).

In the example of FIG. 1, the material testing system 100 further includes a computing device 122. As shown, the computing device 122 is in (e.g., electrical) communication with the drive motor 116 of the drive system 114. In the example of FIG. 1, the material testing system 100 further includes a power supply 124 in electrical communication with the computing device 122 and drive system 114, in order to provide power to both. While shown as spaced from the other components of the material testing system 100 for clarity and ease of understanding, in some examples, the power supply 124 and/or computing device 122 may be attached to and/or integrated into the material testing system 100 (e.g., via base 104 and/or housing).

In the example of FIG. 1, the computing device 122 includes control circuitry 126. In some examples, the control circuitry 126 may include processing circuitry (e.g., one or more general-purpose processors, application-specific integrated circuits, programmable logic devices, systems-on-chip (SoCs), digital signal processors (DSPs) and/or any other type of processing circuitry) and memory circuitry. The control circuitry 126 controls operation of the material testing system 100 (e.g., via the drive system 114).

In some examples, the control circuitry 126 translates commands received from a user to appropriate (e.g., electrical) signals that may be delivered to the drive system 114. To this end, the computing device 122 may include one or more input devices to receive commands from a user, and/or one or more output devices configured to provide outputs to the user. Example input devices include one or more touch screens, mice, keyboards, buttons, switches, slides, knobs, microphones, dials, and/or other electromechanical input devices. Example output devices include one or more display screens, speakers, lights, haptic devices, and/or other output devices. In some examples, the computing device 122 may further include one or more receptacles configured for connection to (and/or reception of) one or more external memory devices (e.g., floppy disks, compact discs, digital video disc, flash drive, etc.). In some examples, a user may control operation of the drive system 114 (and/or the material testing system 100) via input devices and/or output devices of the computing device 122.

The example crosshead 128 extends across a width of the frame, and is retained on the guide rails 106. In some examples, each crosshead 128 includes guide channels through which the guide rails 106 extend, such that movement of the crosshead 128 is guided along the guide rails 106.

In the example of FIG. 1, each crosshead 128 further includes drive shaft attachments 130 that couple the crosshead 128 to the drive shafts 108. In some examples, the drive shaft attachments 130 may be fixedly secured to the crossheads 128. The example drive shaft attachments 130 may comprise ball screws that engage with the screw threads 110 of the drive shafts 108. Example ball screw assemblies may include a screw threaded (e.g., ball) nut with ball bearings that ride in the screw threads 110 between the nut and the drive shafts 108 to decrease friction. In some examples, the drive shaft attachments 130 may be moved up and/or down the screw threads 110 of the drive shafts 108 when the drive shafts 108 are actuated (e.g., rotated), thereby moving the crossheads 128 up and/or down the guide rails 106.

In the example of FIG. 1A, the crosshead 128 includes at least one load sensor 132 (e.g., a load cell) retained on the crosshead 128. Additionally or alternatively, at least one load sensor may be retained on the bottom base 104. In some examples, the load sensor 132 is a load cell configured to measure force (e.g., on the sample, grip, and/or crosshead 128). The load sensor 132 measures force on a fixture 134a. A specimen 136 is coupled between the crosshead 128 and the base 104 via the fixture 134a and a corresponding fixture 134b. The fixtures 134a, 134b may be a compression platen configured to compress a testing sample, or a grip configured to hold a testing specimen 136. Examples of grips include (but are not limited to) bolt holders, wedge grips, side acting grips, manual grips, roller grips, capstan grips, and/or syringe holders, and may be actuated electrically, hydraulically, pneumatically, and/or using any other power source. In some examples, a crosshead 128 may retain multiple load sensors 132. While the crosshead 128 is illustrated as having the load sensor 132 in the example of FIG. 1A, both the fixtures 134a, 134b may be provided with load sensors 132.

The example material testing system 100 further includes one or more position sensors 138 to determine a position of the crosshead 128 (or some predetermined point on the crosshead 128). The position sensor 138 may be, for example, an encoder or other displacement sensor that measures distances traveled by the crosshead 128, proximity sensors that determine a distance between the crosshead 128 and one or more predetermined points, and/or any other type of position sensor. In some examples, the position sensor 138 may include a set of multiple proximity sensors having predetermined positions distributed along a vertical length of the frame that sense whether the crosshead 128 is proximate the corresponding predetermined position to determine the position of the crosshead 128. In some examples, the control circuitry 126 determines a distance between the crosshead 128 and another point, such as the base 104, the top plate 102, or another crosshead 128, based on position measurements generated by the position sensor 138.

FIG. 1B illustrates another example material testing system 150 configured to apply a testing force to a specimen. The example material testing system 150 is similar to the material testing system 100 of FIG. 1A, except that the top plate 102 may serve as the stationary part of the load string (instead of the base 104), and the crosshead 128a moves in the opposite direction to apply tensile or compression forces to a specimen. To this end, the fixturing 134a, 134b is coupled to the top plate 102 and a face of the crosshead 128a that faces the top plate 102.

FIG. 1C illustrates another example material testing system 160 configured to apply a testing force to a specimen coupled between upper and lower crossheads 128a, 128b. The example material testing system 150 is similar to the material testing system 100 of FIG. 1A, except that fixturing 134a, 134b is coupled to respective crossheads 128a, 128b which are driven in opposing directions. For example, the drive shafts 108 of the material testing system 160 have different sets of threads 110a, 110b that have opposing directions. The different threads 110a, 110b may be separated by a dividing line 162 (e.g., a center line).

The opposing directions of the screw threads 110a, 110b on the upper and lower portions of the drive shafts 108 allow a single drive system 114 to move both the upper and lower crossheads 128 at the same time. Thus, an operator may raise the lower crosshead 128b to a more comfortable height when placing and/or adjusting a test sample on the lower crosshead 128b. The transition of the screw threads 110 at the dividing line 162 ensures neither crosshead 128 can move past the dividing line 162. In some examples, a portion of the drive shafts 108 may be entirely unthreaded proximate the dividing line 162, so as to doubly ensure the crossheads 128a, 128b cannot proceed past the dividing line 162. In some examples, an immovable stopper may be engaged to the drive shaft 108 proximate the dividing line 162, to doubly ensure neither crosshead 128 can proceed past the dividing line 162.

The different screw threads 110 on the upper and lower portions of the drive shafts 108 means that the crossheads 128 are moved in different (e.g., opposite) directions when the drive system 114 actuates the drive shafts 108. For example, the crossheads 128a, 128b may be moved away from each other (i.e., farther apart) when the drive shafts 108 are actuated (e.g., rotated) in a first direction, and moved towards each other (i.e., closer together), when actuated in an opposite direction.

The crosshead(s) 128 of the testing system 100 may be moved up and/or down along the guide rails 106 via actuation of the drive system 114 (e.g., in response to commands provided through the computing device 122). For example, the crosshead 128 may apply tensile force to a specimen 136 attached to the fixtures 134a, 134b by moving upwardly toward the top plate 102, while the load sensor 132 generates force and/or the position sensor 138 generates displacement measurements.

The crosshead(s) 128 are permitted to move along a length of the frame between base 104 and the top plate 102. As the distance between the crosshead 128 and the base 104 (FIG. 1A), the top plate 102 (FIG. 1B), or other crosshead 128 (FIG. 1C) increases, the forces on the drive shafts 108 may cause the drive shafts 108 to buckle (e.g., prior to failure of other components in the load string).

As used herein, the term "full load range" refers to a range of distances or positions which, while the crosshead is within, the load string is permitted to apply (e.g., via the drive system 114) up to a rated load to a specimen coupled to the load string. As used herein, the term "limited load range" refers to a range of distances or positions which, while the crosshead is within, the load string is permitted to apply (e.g., via the drive system 114), to the specimen coupled to the load string, up to an upper load limit that is less than the rated load.

As the crosshead 128 moves more than a threshold distance 140 from the base 104 (or from another predetermined location), or as the crosshead 128 enters a limited load range of positions 142 that correspond to more than the threshold distance 140 between the crosshead 128 and the base 104 (or between the crosshead 128 and the top plate 102, or between two crossheads 128), the control circuitry 126 reduces an upper limit on the load applied by the load string to avoid buckling by the components in the load string (e.g., by the drive shaft attachments 130, such as ball screw nuts). The boundary of the full load range corresponds to the threshold distance 140, which is also marked as a threshold position 144.

In some examples, the control circuitry 126 reduces the upper limit on the load to a predetermined limited load, such as a rated extended load for the longest distance that can be achieved by the material testing system 100. In some other examples, the control circuitry 126 reduces the upper limit on the testing force by an amount that is based on a difference between 1) the distance between the crosshead 128 and the base 104 and 2) the threshold distance 140 (e.g., the boundary of the full load range, the threshold position 144). In some examples, the control circuitry 126 determines the upper testing force limit based on the difference according to a curve. The curve may be a linear curve, an exponential curve, a logarithmic curve, a polynomial curve, or any other desired relationship.

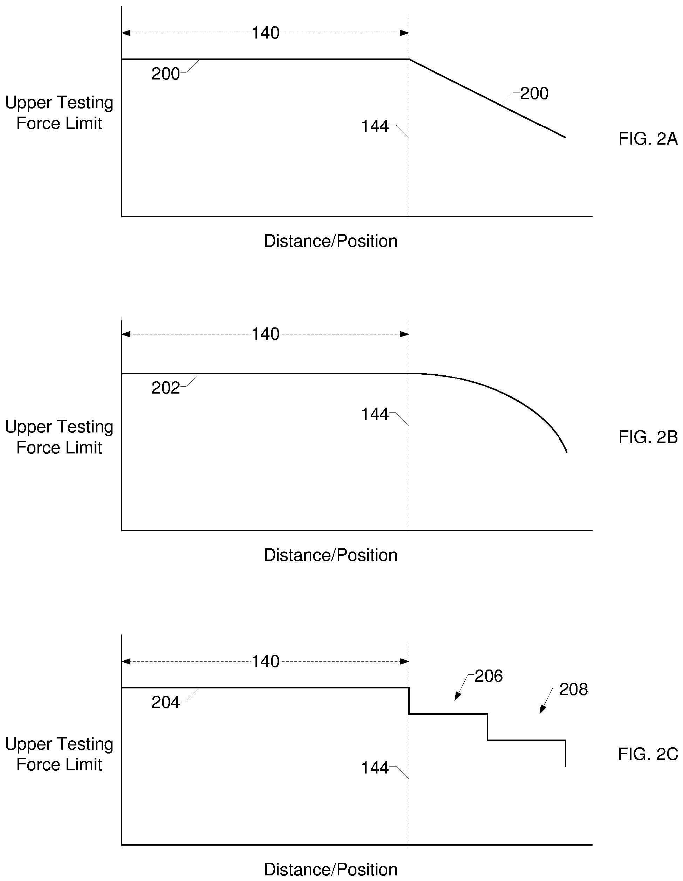

FIG. 2A is a graph illustrating an example relationship 200 between an upper testing force limit applied by the control circuitry 126 and a distance or position of the crosshead(s) 128. As the distance/position exceeds the threshold range (e.g., the threshold distance 140, the threshold position 144), the control circuitry 126 reduces the upper testing force limit linearly (e.g., a linear curve) based on the distance beyond the threshold position 144. FIG. 2B is a graph illustrating an example relationship 202 between an upper testing force limit applied by the control circuitry 126 and a distance or position of the crosshead(s) 128. As the distance/position exceeds the threshold range (e.g., the threshold distance 140, the threshold position 144), the control circuitry 126 reduces the upper testing force limit 200 according to an exponential curve based on the distance beyond the threshold position 144.

In other examples, the control circuitry 126 determines the upper limit based on comparing the distance to multiple ranges of distances, or by comparing the position of the crosshead 128 to multiple ranges of positions. Each of the ranges of distances or positions corresponds to a value of the upper testing force limit that is less than the upper limit in the full load range. FIG. 2C is a graph illustrating another example relationship 204 between an upper testing force limit applied by the control circuitry 126 and a distance or position of the crosshead(s) 128. As the distance/position exceeds the threshold range (e.g., the threshold distance 140, the threshold position 144), the control circuitry 126 determines whether the crosshead 128 is within a first extended range of positions 206 or a second extended range of positions 208, in which each extended range of positions 206, 208 corresponds to a reduced upper testing force limit. The example relationship 204 provides a step-down in the upper testing force limit as the crosshead position continues to extend beyond the threshold position 144.

The example extended ranges 206, 208, or any other type of relationship between position or distance and the upper testing force limit, may be stored in a lookup table, algorithmically, and/or using any other method.

Whether the upper testing force limit is the rated load (e.g., in the full load range) or a reduced upper limit (e.g., in the limited load range), the control circuitry 126 monitors the load being applied by the crosshead 128 and compares the measured load to the upper limit. In some examples, the control circuitry 126 controls the drive system 114 not to exceed the upper limit using a load-controlled feedback loop. In some examples, the control circuitry 126 may stop the drive system 114 in response to detecting that the load has exceeded, or is anticipated to exceed, the upper testing force limit.

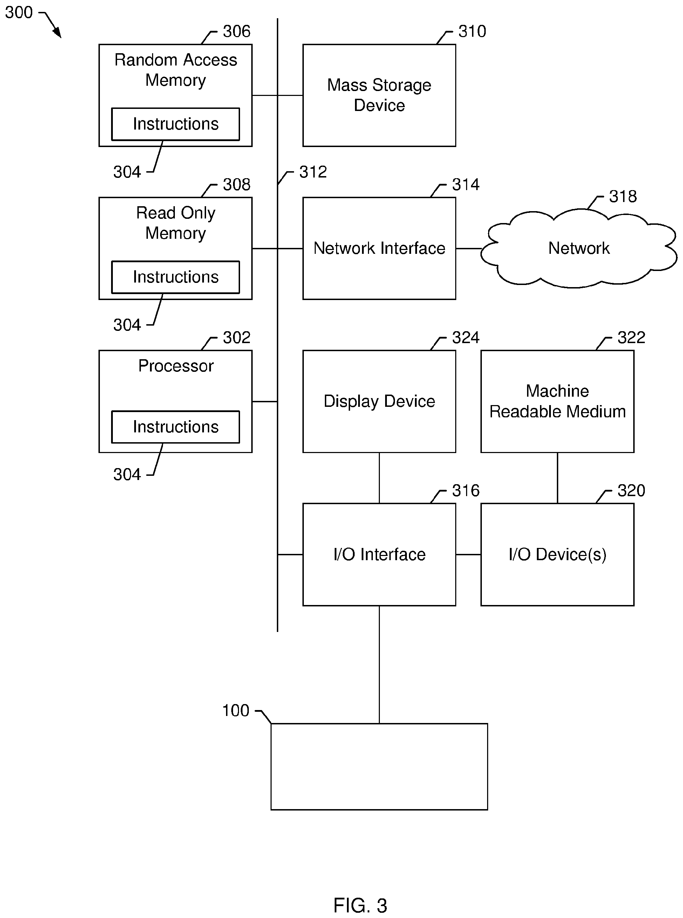

FIG. 3 is a block diagram of an example computing device 300 that may be used to implement the computing device 122 of FIGS. 1A-1C. As shown in FIGS. 1A, 1B, and 1C, the material testing systems 100, 150, 160 each include the computing device 122 coupled to the frame.

The example computing device 300 may be a general-purpose computer, a laptop computer, a tablet computer, a mobile device, a server, an all-in-one computer, and/or any other type of computing device. The computing device 300 of FIG. 3 includes a processor 302, which may be a general-purpose central processing unit (CPU). The processor 302 may implement the example control circuitry 126 of FIGS. 1A, 1B, and/or 1C. In some examples, the processor 302 may include one or more specialized processing units, such as FPGA, RISC processors with an ARM core, graphic processing units, digital signal processors, and/or system-on-chips (SoC). The processor 302 executes machine-readable instructions 304 that may be stored locally at the processor (e.g., in an included cache or SoC), in a random access memory 306 (or other volatile memory), in a read-only memory 308 (or other non-volatile memory such as FLASH memory), and/or in a mass storage device 310. The example mass storage device 310 may be a hard drive, a solid-state storage drive, a hybrid drive, a RAID array, and/or any other mass data storage device. A bus 312 enables communications between the processor 302, the RAM 306, the ROM 308, the mass storage device 310, a network interface 314, and/or an input/output interface 316.

An example network interface 314 includes hardware, firmware, and/or software to connect the computing device 300 to a communications network 318 such as the Internet. For example, the network interface 314 may include IEEE 302.X-compliant wireless and/or wired communications hardware for transmitting and/or receiving communications.

An example I/O interface 316 of FIG. 3 includes hardware, firmware, and/or software to connect one or more input/output devices 320 to the processor 302 for providing input to the processor 302 and/or providing output from the processor 302. For example, the I/O interface 316 may include a graphics-processing unit for interfacing with a display device, a universal serial bus port for interfacing with one or more USB-compliant devices, a FireWire, a field bus, and/or any other type of interface. Other example I/O device(s) 320 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The computing device 300 may access a non-transitory machine-readable medium 322 via the I/O interface 316 and/or the I/O device(s) 320. Examples of the machine-readable medium 322 of FIG. 3 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine-readable media.

In the example of FIG. 3, the material testing system 100, 150, 160 is coupled to the computing device 300 via the I/O interface 316, such as via a USB port, a Thunderbolt port, a FireWire (IEEE 1394) port, and/or any other type serial or parallel data port. In some examples, the material testing system 100, 150, 160 is coupled to the network interface 314 and/or to the I/O interface 316 via a wired or wireless connection (e.g., Ethernet, Wi-Fi, etc.), either directly or via the network 318.

The example computing device 300 may directly control the material testing system 100, 150, 160 or may communicate with one or more specialized control systems or circuits in the material testing system. For example, the computing device 300 may communicate test parameters, receive measurements and/or other results, and/or otherwise control and/or communicate with the material testing system 100, 150, 160. For example, the material testing system 100, 150, 160 may include one or more communication or I/O interfaces to enable communication with the computing device 300.

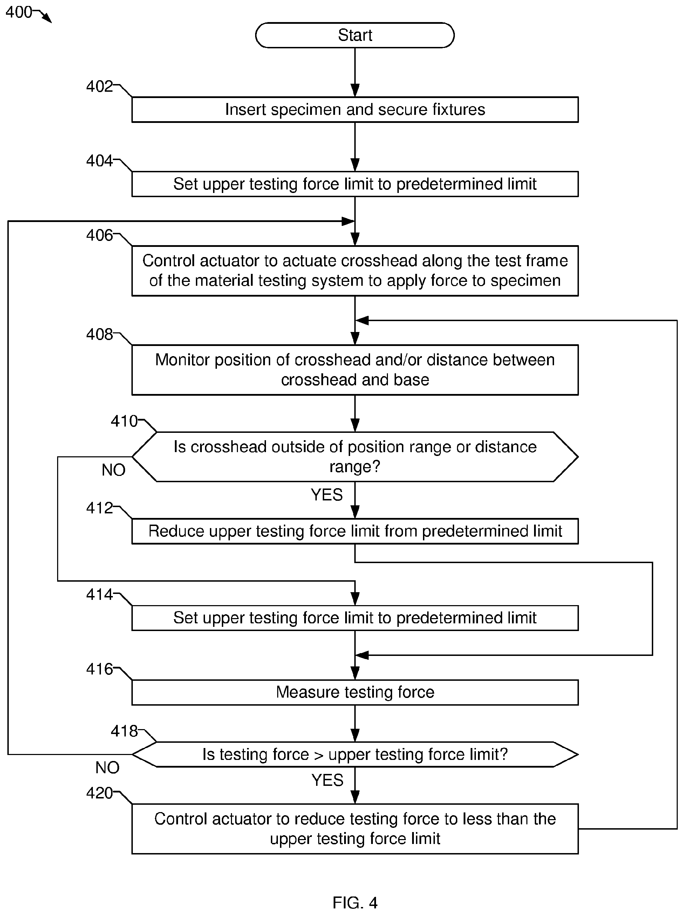

FIG. 4 is a flowchart illustrating an example method 400 that may be performed to implement the example material testing systems 100, 150, 160 of FIGS. 1A-1C to perform material testing. The example method 400 is described below with reference to the material testing system 100 of FIG. 1A, which may be implemented using the computing device 300 of FIG. 3. However, the method 400 may be adapted for use with the material testing machines 150, 160 of FIGS. 1B and 1C.

At block 402, an operator may insert a specimen (e.g., specimen 136 of FIG. 1A) into the material testing system 100 and close the fixtures 134a, 134b. The fixtures 134a, 134b may be closed automatically or manually. In some examples, the crosshead 128 is positioned prior to insertion to ensure the fixtures 134a, 134b are the correct distance to grip the desired points on the specimen 136.

At block 404, the control circuitry 126 sets the upper testing force limit of the material testing system to a predetermined limit. For example, the predetermined limit may be a rated force or load capacity of the material testing system 100, or a predetermined acceptable load limit (e.g., a manufacturer-set limit, an operator-set limit, a specimen-based limit).

At block 406, the control circuitry 126 controls an actuator (e.g., the drive system 114, the motor 116) to actuate the crosshead 128 along the test frame to apply force to the specimen 136. For example, the control circuitry 126 may control the drive system 114 to drive the crosshead 128, via the drive shafts 108 and the drive shaft attachments 130, to apply a tension force to the specimen 136.

At block 408, the control circuitry 126 monitors a position of the crosshead 128 and/or a distance between the crosshead 128 and the base 104, based on position measurements generated by the position sensor 138.

At block 410, the control circuitry 126 determines whether the crosshead 128 is outside of a position range (e.g., beyond the threshold position 144) or a distance range 140 (e.g., outside of the full load range, within the limited load range). For example, the control circuitry 126 may compare the measured position or distance with the corresponding threshold position 144 or threshold distance 140.

If the crosshead 128 is outside of a position or distance range (block 410), at block 412 the control circuitry 126 reduces the upper testing force limit from the predetermined limit. For example, the control circuitry 126 may set the upper testing force limit using a predetermined relationship or curve (e.g., relationships 200, 202, 204 of FIGS. 2A, 2B, and 2C) based on a difference between the current position or distance and the threshold position 144 or distance 140, or may set the upper testing force limit to a predetermined reduced limit.

Conversely, if the crosshead 128 is not outside of the position or distance range (block 410), at block 414 the control circuitry 126 sets the upper testing force limit of the material testing system to the predetermined limit.

After setting the upper testing force limit to the predetermined limit (block 414) or to the reduced limit (block 412), at block 416 the control circuitry 126 measures a testing force (e.g., using the load sensor(s) 132). At block 418, the control circuitry 126 determines whether the measured testing force is greater than the current upper testing force limit. If the measured testing force is not greater than the current upper testing force limit (block 418), control returns to block 406.

If the measured testing force is greater than the current upper testing force limit (block 418), at block 420 the control circuitry 126 controls the actuator (e.g., the drive system 114) to reduce the testing force to less than the upper testing force limit. In some examples, the control circuitry 126 may stop the actuator in response to exceeding the upper testing force limit. In some examples, the control circuitry 126 may prevent the actuator from exceeding the upper testing force limit via one or more control feedback loops. Control then returns to block 408 to continue monitoring.

The example method 400 may end when, for example, the specimen 136 experiences a failure (e.g., as detected via the load sensor(s) 132), or in response to any other conditions.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a material physical property testing process.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.
Certain embodiments of the invention are described in the following clauses:
Clause 1. A material testing system, comprising:
   a test frame;
   a base configured to grip a first position on a test specimen;
   a crosshead configured to be coupled to a second position on the test specimen, and to be actuated to transfer testing force to the test specimen during a material test;
   an actuator configured to actuate the crosshead along the test frame and to apply the testing force to the crosshead; and
   control circuitry configured to:
      control the actuator to apply the testing force to a specimen via the crosshead, such that the testing force does not exceed an upper limit; and
      while a distance between the crosshead and the base is at least a threshold distance, reduce the upper limit on the testing force from a value of the upper limit while the distance between the crosshead and the base is less than the threshold distance.
Clause 2. The material testing system as defined in clause 1, further comprising a position sensor configured to determine a position of the crosshead along a length of the test frame, the control circuitry configured to determine the distance between the crosshead and the base based on the determined position of the crosshead.
Clause 3. The material testing system as defined in clause 2, wherein the position sensor comprises a travel sensor.
Clause 4. The material testing system as defined in clause 1, wherein the control circuitry is configured to reduce the upper limit on the testing force by an amount that is based on a difference between 1) the distance between the crosshead and the base and 2) the threshold distance.
Clause 5. The material testing system as defined in clause 4, wherein the control circuitry is configured to determine the upper limit based on the difference according to a curve.
Clause 6. The material testing system as defined in clause 4, wherein the control circuitry is configured to determine the upper limit based on the difference using a lookup table.
Clause 7. The material testing system as defined in clause 4, wherein the control circuitry is configured to determine the upper limit based on comparing the difference to each of a plurality of ranges of distances, each of the plurality of ranges corresponding to a value of the upper limit that is less than the value of the upper limit while the distance between the crosshead and the base is less than the threshold distance.
Clause 8. The material testing system as defined in clause 1, wherein the control circuitry is configured to control the actuator to stop the actuator in response to the testing force reaching the upper limit.
Clause 9. The material testing system as defined in clause 1, wherein the control circuitry is configured to reduce the upper limit while the distance between the crosshead and the base is at least the threshold distance and a testing mode is a tension test.
Clause 10. The material testing system as defined in clause 1, wherein the value of the upper limit while the distance between the crosshead and the base is less than the threshold distance is based on a rated capacity of the material testing system.
Clause 11. A method to control a material testing system, the method comprising:
   controlling, via control circuitry, an actuator of a material testing system to actuate a crosshead along a test frame of the material testing system, to apply a testing force to the crosshead to perform a tension test on a specimen, such that the testing force does not exceed an upper limit; and
   while a distance between the crosshead and a base of the material testing system is at least a threshold distance, reducing the upper limit on the testing force from a value of the upper limit while the distance between the crosshead and the base is less than the threshold distance.
Clause 12. A material testing system, comprising:
   a test frame;
   a base configured to grip a first position on a test specimen;
   a crosshead configured to be coupled to a second position on the test specimen, and to be actuated to transfer testing force to the test specimen during a material test;
   an actuator configured to actuate the crosshead along the test frame and to apply the testing force to the crosshead; and
   control circuitry configured to:
      control the actuator to apply the testing force to the crosshead to perform a tension test on a specimen, such that the testing force does not exceed an upper limit; and
      while a position of the crosshead is within a predetermined range along a length of the test frame, reduce the upper limit on the testing force from a value of the upper limit while the position of the crosshead is outside of the predetermined range.
Clause 13. The material testing system as defined in clause 12, further comprising a position sensor configured to determine the position of the crosshead along a length of the test frame.
Clause 14. The material testing system as defined in clause 13, wherein the position sensor comprises a travel sensor.
Clause 15. The material testing system as defined in clause 12, wherein the control circuitry is configured to reduce the upper limit on the testing force by an amount that is based on a difference between 1) the position of the crosshead along the test frame and 2) a threshold position.
Clause 16. The material testing system as defined in clause 15, wherein the control circuitry is configured to determine the upper limit based on the difference according to a curve.
Clause 17. The material testing system as defined in clause 15, wherein the control circuitry is configured to determine the upper limit based on the difference using a lookup table.
Clause 18. The material testing system as defined in clause 15, wherein the control circuitry is configured to determine the upper limit based on comparing the difference to each of a plurality of ranges of positions, each of the plurality of ranges corresponding to a value of the upper limit that is less than the value of the upper limit while the position of the crosshead is within the predetermined range.
Clause 19. The material testing system as defined in clause 12, wherein the control circuitry is configured to control the actuator to stop the actuator in response to the testing force reaching the upper limit.
Clause 20. The material testing system as defined in clause 12, wherein the control circuitry is configured to reduce the upper limit while the position of the crosshead is outside of the predetermined range and a testing mode is a tension test.

## Claims

1. A material testing system, comprising:
a test frame;
a base configured to grip a first position on a test specimen;
a crosshead configured to be coupled to a second position on the test specimen, and to be actuated to transfer testing force to the test specimen during a material test;
an actuator configured to actuate the crosshead along the test frame and to apply the testing force to the crosshead; and
control circuitry configured to:
control the actuator to apply the testing force to a specimen via the crosshead, such that the testing force does not exceed an upper limit; and
while a distance between the crosshead and the base is at least a threshold distance, reduce the upper limit on the testing force from a value of the upper limit while the distance between the crosshead and the base is less than the threshold distance.

2. The material testing system as defined in claim 1, further comprising a position sensor configured to determine a position of the crosshead along a length of the test frame, the control circuitry configured to determine the distance between the crosshead and the base based on the determined position of the crosshead, and optionally
wherein the position sensor comprises a travel sensor.

3. The material testing system as defined in claim 1 or claim 2, wherein the control circuitry is configured to reduce the upper limit on the testing force by an amount that is based on a difference between 1) the distance between the crosshead and the base and 2) the threshold distance.

4. The material testing system as defined in claim 3, wherein the control circuitry is configured to determine the upper limit based on the difference according to a curve, and/or
wherein the control circuitry is configured to determine the upper limit based on the difference using a lookup table.

5. The material testing system as defined in claim 3, wherein the control circuitry is configured to determine the upper limit based on comparing the difference to each of a plurality of ranges of distances, each of the plurality of ranges corresponding to a value of the upper limit that is less than the value of the upper limit while the distance between the crosshead and the base is less than the threshold distance.

6. The material testing system as defined in any one of claims 1 to 5, wherein the control circuitry is configured to control the actuator to stop the actuator in response to the testing force reaching the upper limit.

7. The material testing system as defined in any one of claims 1 to 6, wherein the control circuitry is configured to reduce the upper limit while the distance between the crosshead and the base is at least the threshold distance and a testing mode is a tension test, and/or
wherein the value of the upper limit while the distance between the crosshead and the base is less than the threshold distance is based on a rated capacity of the material testing system.

8. A method to control a material testing system, the method comprising:
controlling, via control circuitry, an actuator of a material testing system to actuate a crosshead along a test frame of the material testing system, to apply a testing force to the crosshead to perform a tension test on a specimen, such that the testing force does not exceed an upper limit; and
while a distance between the crosshead and a base of the material testing system is at least a threshold distance, reducing the upper limit on the testing force from a value of the upper limit while the distance between the crosshead and the base is less than the threshold distance.

9. A material testing system, comprising:
a test frame;
a base configured to grip a first position on a test specimen;
a crosshead configured to be coupled to a second position on the test specimen, and to be actuated to transfer testing force to the test specimen during a material test;
an actuator configured to actuate the crosshead along the test frame and to apply the testing force to the crosshead; and
control circuitry configured to:
control the actuator to apply the testing force to the crosshead to perform a tension test on a specimen, such that the testing force does not exceed an upper limit; and
while a position of the crosshead is within a predetermined range along a length of the test frame, reduce the upper limit on the testing force from a value of the upper limit while the position of the crosshead is outside of the predetermined range.

10. The material testing system as defined in claim 9, further comprising a position sensor configured to determine the position of the crosshead along a length of the test frame, and optionally
wherein the position sensor comprises a travel sensor.

11. The material testing system as defined in claim 9 or claim 10, wherein the control circuitry is configured to reduce the upper limit on the testing force by an amount that is based on a difference between 1) the position of the crosshead along the test frame and 2) a threshold position.

12. The material testing system as defined in claim 11, wherein the control circuitry is configured to determine the upper limit based on the difference according to a curve, and/or
wherein the control circuitry is configured to determine the upper limit based on the difference using a lookup table.

13. The material testing system as defined in claim 11, wherein the control circuitry is configured to determine the upper limit based on comparing the difference to each of a plurality of ranges of positions, each of the plurality of ranges corresponding to a value of the upper limit that is less than the value of the upper limit while the position of the crosshead is within the predetermined range.

14. The material testing system as defined in any one of claims 9 to 13, wherein the control circuitry is configured to control the actuator to stop the actuator in response to the testing force reaching the upper limit.

15. The material testing system as defined in any one of claims 9 to 14, wherein the control circuitry is configured to reduce the upper limit while the position of the crosshead is outside of the predetermined range and a testing mode is a tension test.
